Europäisches Patentamt

(19) European Patent Office

Office européen des brevets

(11) Publication number: **0 208 381**
**B1**

# EUROPEAN PATENT SPECIFICATION

(45) Date of publication of the patent specification:
13.06.90

(51) Int. Cl.⁵: **H02P 7/628**

(21) Application number: 86201202.8

(22) Date of filing: 09.07.86

(54) Frequency and/or voltage control device for at least partially inductive loads, in particular three-phase motors.

(30) Priority: 11.07.85 NL 8501987

(43) Date of publication of application:
14.01.87 Bulletin 87/3

(45) Publication of the grant of the patent:
13.06.90 Bulletin 90/24

(84) Designated Contracting States:
AT BE CH DE FR GB IT LI LU NL SE

(56) References cited:
EP-A- 0 063 326
GB-A- 1 020 214

PATENTS ABSTRACTS OF JAPAN, vol. 9,
no. 19 (E-292)[1742], 25th January 1985; & JP - A
- 59 165 988 (SHINPO KOGYO K.K.) 19-09-1984

(73) Proprietor: Cox, Cornelius Johannus Petrus, Hoef 11,
NL-5525 KM Duizel(NL)

(72) Inventor: Cox, Cornelius Johannus Petrus, Hoef 11,
NL-5525 KM Duizel(NL)

(74) Representative: Noz, Franciscus Xaverius, Ir. et al,
Boschdijk 155, NL-5612 HB Eindhoven(NL)

## Description

The invention relates to a frequency and/or voltage control device for at least partially inductive loads, comprising an invertor with two input leads for connection to a positive and negative DC voltage, respectively, three pairs of semiconductor switches having a control electrode, each pair being connected in series between the input leads, and three output leads, each being connected to a junction of a respective series circuit of two semiconductor switches, a control unit for selectively feeding switch on/off signals to the control electrodes of the semiconductor switches, a current sensing circuit for sensing at least one current related to the operation of the invertor and for providing a sensed signal corresponding therewith and a processing unit for converting the sensed signal of the current sensing circuit into a feedback signal for the control unit, wherein the current sensing circuit is provided at the input side of the invertor for sensing, during operation of the control device, a quasi direct current, generated by switching of the semiconductor switches of the invertor, in one or both of the input leads of the invertor.

A control device of the kind mentioned above is known.

With this known control device the current sensing circuit is provided at the output side of the invertor for scanning, during operation of the control device, alternating currents in the output leads of the invertor, generated by switching of the semiconductor switches of the invertor, wherein the test signal of the current sensing circuit can be used for various purposes, among which possibly as a feedback signal for the control unit.

Disadvantages of this known control device are, therefore, that three current sensors need to be applied and that sensor signals generated by said current sensors must be correlated with each other to generate a feedback signal referred to above. Correlation errors in the separate sensor signals must be added together to determine the error in the feedback signal.

Another disadvantage is that the current sensing at the output of the invertor is in fact comparatively low frequency, whereas the control of the semiconductor switches is high frequency. Apart from the fact that the feedback signal will contain many errors it will consequently be also too slow to carry out a correct voltage and/or frequency correction.

The purpose of the invention is to remove the afore-mentioned and other disadvantages of the known control device and for that purpose provides a device of the kind mentioned in the preamble, characterized in that the processing unit comprises a multiplexer which, by multiplexing the sensed signal of the current sensing circuit with a timing in accordance to the switch on/off signals of the control unit, generates at least one feedback signal for the control unit.

A principal measure of the invention is to provide the current sensing circuit at the input side of the invertor, as a result of which fluctuations in e.g. the direct current to the invertor resulting from the generation, by means of the semiconductor switches, of a rotary field can be scanned with a single current sensor, e.g. Hall-element. Said fluctuations in the direct current to the invertor are high frequency and may result in a fast reacting feedback signal, therefore.

Attempts have been made before to use said fluctuations in the direct current for feedback, but up to the day of the invention it was thought by persons skilled in this field of the art that said current fluctuations, due to their erratic character, were unusable for application as a feedback signal.

According to a second important measure of the invention, however, it is possible to obtain, viz. by multiplexing said direct current having said erratic fluctuations with a timing in accordance the switch on/off signals of the semiconductor switches in the invertor, a very fast, reliable and precise feedback signal for a voltage and/or frequency feedback or control loop. In sum it is possible to determine all three motor or line currents with one current sensor!

From the base feedback signal of the multiplexer it is possible to obtain with simple means signals for i.a. the product between motor current and work factor ($I_m \cdot \cos\varphi$), torque, generator/motor operation, acceleration with motor operation and braking with generator operation, in case three-phase motors are used as load.

Besides that it is possible, according to the invention, also by using simple means, to use the sensed signal of the current sensing circuit and the detection of inadmissible peak currents to prevent the semiconductor switches being switched on/off.

For the semiconductor switches GTO switches (e.g. with integrated free-wheeling diodes) are preferably applied. The invertor may also be provided, however, with thyristors with associated commutation circuits with one or more auxiliary thyristors. Also it might be possible to apply transistors.

Preferably the control unit comprises a rotary field generating and voltage control circuit on the basis of pulse time modulation. Preferably the modulation is thereby such that sinusoidal, on the average, signals are obtained.

The document EP-A 0 083 326 discloses a frequency and voltage control device corresponding to the preamble of claim 1.

The invention will now be described in detail with reference to the accompanying drawing, in which:

Fig 1 is a combined block and circuit diagram of a possible embodiment of the control device according to the present invention;

Fig 2 shows the three phase voltages on the output leads of the invertor;

Fig 3 shows the three line voltages of a three-phase motor connected to the output leads of the invertor, as well as a line current generated by switching-on of a so-called positive GTO switch and associated so-called negative GTO switch and hatched the negative and positive parts of said current in a certain sub period;

Fig 4 shows the sub periods 0–5 generated by the decoder of fig 1 for clockwise rotation of a three-phase motor connected to the output leads of the invertor, whereby sub period 0 corresponds with the hatched current parts in fig 3;

Fig 5 corresponds with fig 4, but then for anti-clockwise rotation of the three-phase motor; and

Fig 6 illustrates the multiplexing, according to the invention, by means of a quasi direct current, i.e. direct current with erratic current fluctuations, in one of the input leads of the invertor and a pulse time modulating signal corresponding with the current in fig 3 during the sub period 0 in fig 4.

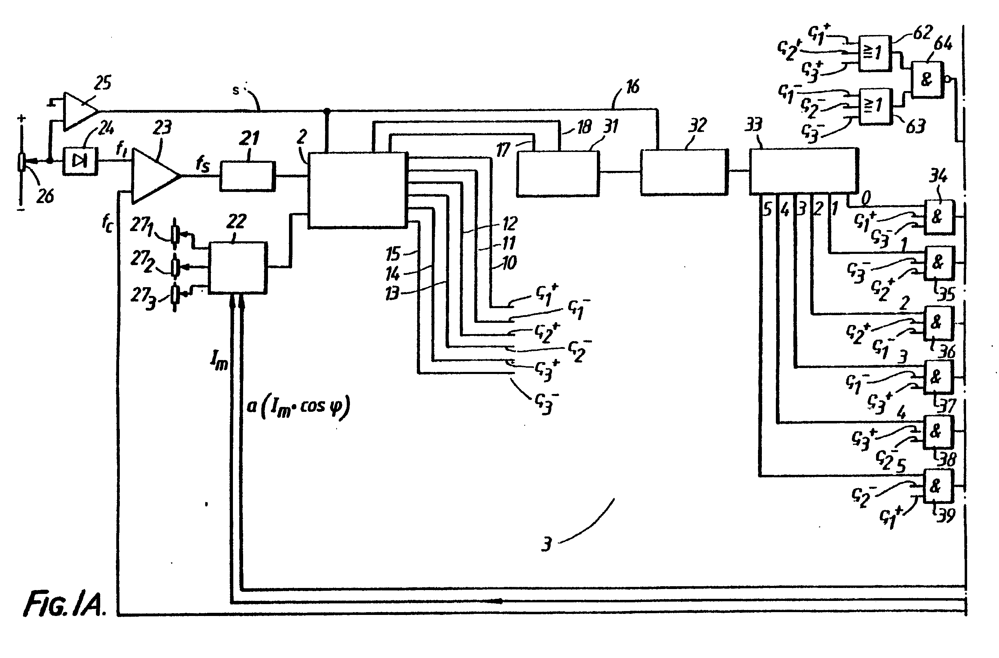

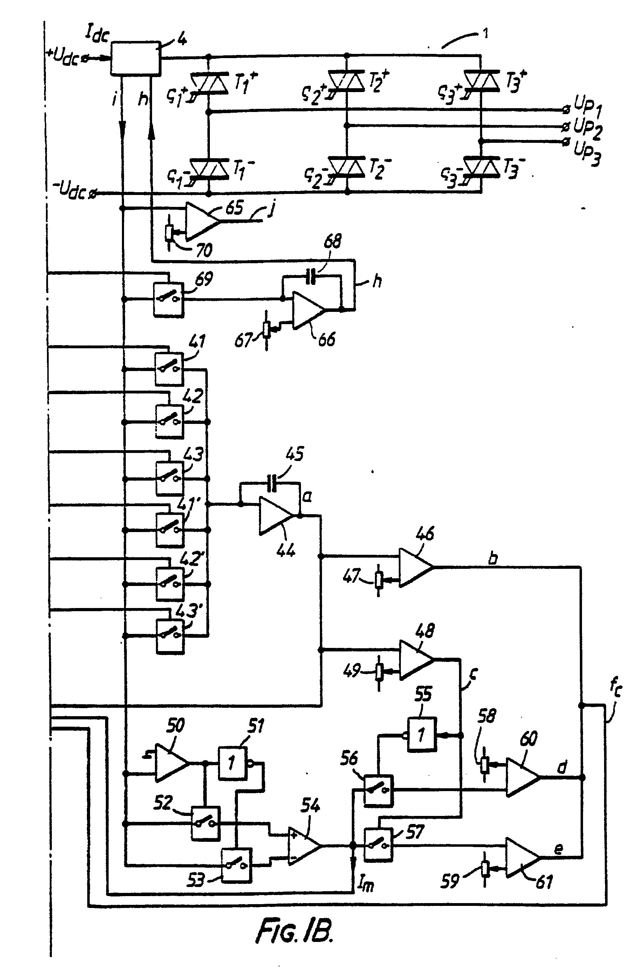

In fig 1 the invertor, in its simplest form, is indicated by the reference number 1. The invertor 1 has six GTO switches with integrated free-wheeling diodes and gate electrodes for switching on and off. The GTO-switches may be replaced by e.g. thyristors or transistors, be it that in practice the invertors will be more complicated then. At the input side the invertor 1 is to be connnected with its input leads to a positive voltage $+U_{dc}$ and a negative voltage $-U_{dc}$, respectively, i.e. in practice to the electrolytic capacitor battery of a rectifier/convertor combination to be connected to a three-phase mains. In that case direct voltages $\pm U_{dc}$ are the buffer voltages of the convertor, therefore. Usually the convertor is provided with a switched mode power supply for supplying the low current components in the control device.

The postive GTOs $T_{1+}$, $T_{2+}$ and $T_{3+}$ are connected with their anodes to the positive input lead and connected in series to the negative GTOs $T_{1-}$, $T_{2-}$ and $T_{3-}$, the cathodes of which are connected to the negative input lead of the invertor 1. The junctions of the GTO pairs $T_{1+}$,$T_{1-}$; $T_{2+}$, $T_{2-}$ and $T_{3+}$, $T_{3-}$ respectively are connected to the output leads which may have the phase voltages $U_{P1}$, $U_{P2}$, and $U_{P3}$ respectively. Various loads may be connected to the output leads of the invertor 1, which loads are at least partially inductive in practice and which may in particular be three-phase motors.

Hereinafter the frequency and/or voltage control device as applied to three-phase motors will be considered. Connected to the output leads may be one or several three-phase motors.

Fig 1 illustrates, with reference number 2, the control unit which preferably comprises a rotary field generating and voltage control circuit on the basis of pulse time modulation. The control unit 2 generates, in the form of a pulse-shaped signal being sinusoidal on the average, switch on/off signals $G_{1+}$,$G_{1-}$,$G_{2+}$ $G_{2-}$, $G_{3+}$,$G_{3-}$ for i.a. feed to the dual gate electrodes of the semiconductor switches $T_{1+}$, $T_{1-}$, $T_{2+}$, $T_{2-}$, $T_{3+}$, $T_{3-}$ respectively. Later it will be discussed how the same signals are used in the multiplexer which is indicated by the reference number 3.

Reference number 4 indicates the current sensing circuit, preferably comprising a Hall-element, through which element e.g. the positive input lead of the invertor is led, through which the quasi direct current $I_{dc}$, flows, and the Hall-element provides a sensed signal i corresponding therewith, with i.a. is fed to the multiplexer 3. An example of said sensed signal i is illustrated in fig 6.

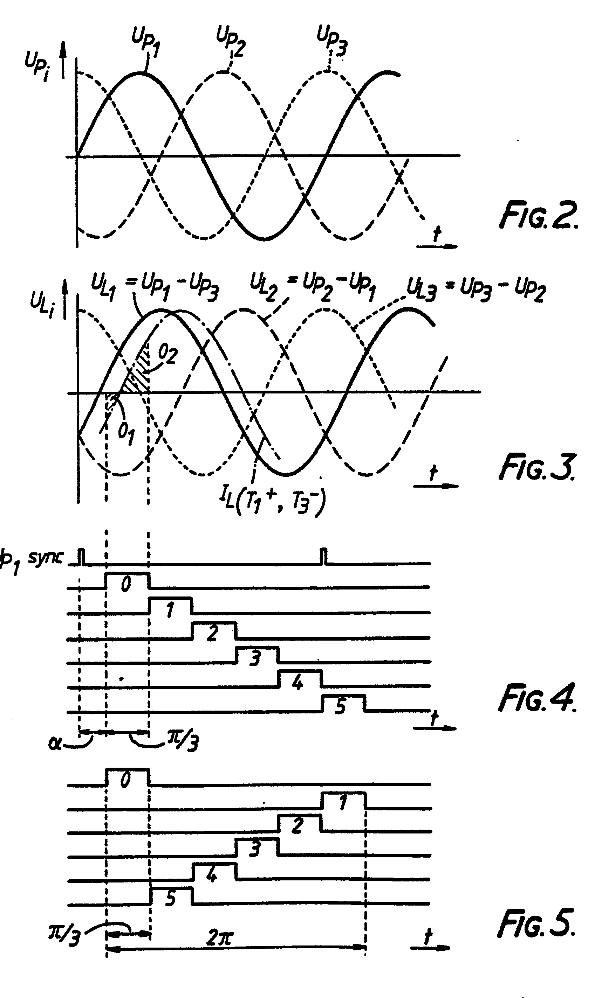

As said before the phase voltages on the output leads are pulse time modulation signals, the value of which is sinusoidal on the average. This is illustrated in fig 2. In particular the phase voltage $U_{Pi}$ has been plotted along the ordinate, whereas along the abscissa the time (or the number of radials) has been plotted. The full line illustrates the phase voltage on the output lead, connected to the junction between the semiconductor switches $T_{1+}$ and $T_{1-}$, the dash line illustrates the phase voltage on the output lead, connected to the semiconductor switches $T_{2+}$ and $T_{2-}$ and finally the dotted line illustrates the phase voltage on the output lead, connected to the junction between the semiconductor switches $T_{3+}$ and $T_{3-}$. Naturally the period of the phase voltages depends on the frequency determined by the control unit and the phase voltages are shifted $2/3\pi$ rad relatively to each other.

In fig 3 the line voltages are plotted, whereby the ordinate indicates the line voltage $U_{Li}$ and the abscissa indicates the time (number of radials). The full line indicates the line voltage $U_{L1}$, being the difference between the phase voltages $U_{P1}$ and $U_{P2}$, whereas a dash line indicates the line voltage $U_{L2}$, being the difference between the phase voltages $U_{P2}$ and $U_{P1}$. A dotted line finally indicates the line voltage $U_{L3}$, being the difference between the phase voltages $U_{P3}$ and $U_{P2}$.

With the phase sequence of the line voltages $U_{Li}$ indicated in fig 3 a three-phase motor connected to the output leads of the invertor 1 will rotate clockwise. By e.g. change of phase relative to the first line voltage of the second and third line voltages the rotation of the motor will be reversed, i.e. be anti-clockwise.

Also in fig 3 the line or motor current is indicated which will flow by driving semiconductor switches $T_{1+}$ and $T_{3-}$. Said motor current lags on the first line voltage with a work factor $\cos\varphi$, which is dependent on the motor voltage and the motor load, whereby the motor voltage may be adjusted by the control unit, besides the frequency of the phase voltages and therefore the line voltages.

Again, in practice the wave forms of fig 2 and fig 3 do not occur but are only idealized and average values and the signal i (fig 6) is indeed an actually occurring sensed signal, the erractic pattern of which is caused by i.a. the actual line voltages.

The hatched parts under the current curve $I_L$ ($T_{1+}$, $T_{3-}$) will be explained later when the multiplexer 3 according to the invention is discussed, whereby it is remarked that said hatched areas correspond with those in the sensed signal i of fig 6.

As already said before, the control unit 2 determines the frequency of the rotary field and the motor voltage. The frequency is adjusted by an adjusting means 26, whilst the motor voltages are adjusted by the adjusting means $27_1$, $27_2$ and $27_3$. The adjusting signal of the adjusting means 26 is amplified by an amplifier 24 and supplied to an input terminal of a differential amplifier 23 as the frequent adjusting signal $f_i$, the output of which differential amplifier is connected to an oscillator 21 for supplying the fre-

quency control signal $f_s$ thereto, whereby the output signal of the oscillator determines the frequency of the rotary field to be generated by the control unit 2. The adjusting means 26 can generate a positive as well as a negative signal, i.e. that as a result of that a rotary field rotating clockwise and a rotary field rotating anti-clockwise, respectively, is generated, whereby the operational amplifier 25 generates a polarity signal s which indicates the direction of rotation.

The motor voltage adjusting means $27_1$–$27_3$ are connected to a motor voltage control means 22 which makes the control unit 2 determine the motor voltages, in particular the voltage increase on starting as a function of $I_m \cdot \cos\varphi$.

Now a specific embodiment of the multiplexer will be described, which at least partially replaces the processing unit according to the state of the art.

The multiplexer 3 comprises a timer circuit, in this case comprising a counter 31, reversible ring counter 32 and decoder 33. The counter 31 of the multiplexer 3 receives a signal on lead 17 from the control unit 2, which signal is representative for the cycle of the sinusoidal, on the average, phase voltages on the output leads of the invertor, i.e. the frequency signal of the phase voltages $U_{P1}$–$U_{P3}$ of fig 2.

Furthermore a synchronization circuit (not illustrated) is provided, which may be incorporated in the control unit 2, which synchronization circuit generates a synchronization signal related to the zero crossing in one direction of one of the phase voltages and which is supplied via lead 18 to the counter 31, wherein said synchronization signal may be a pulse with each positive going zero crossing of the phase voltage $U_{P1}$ of fig 2, which is indicated in the fig 4 which is to be further discussed.

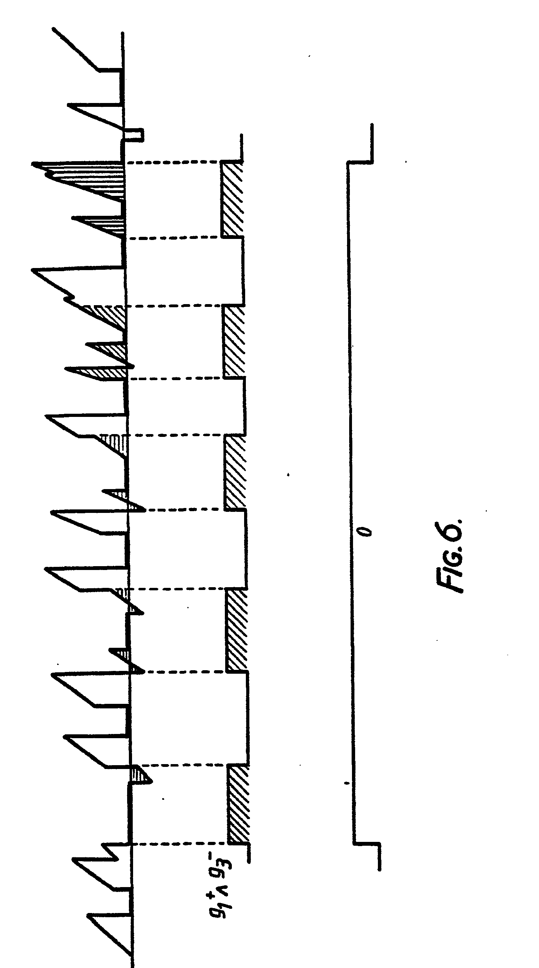

The timer circuit 31, 32, 33 divides the period determined by the control unit 2 into a number of sub periods 0–5, preferably being equal to each other and contiguous to each other, as is illustrated in figs 4 and 5, for rotating, clockwise and anti-clockwise respectively, a three-phase motor connected to the output leads of invertor 1. In this embodiment the cycle of the frequency signal of the control unit 2 is divided into six contiguous sub periods, i.e. always occurring successively in time, of $\pi/3$ rad, in particular 0, 1, 2, 3, 4 and 5 in figs 4 and 5. For that purpose the counter 31 counts periods of $\pi/3$ rad. Furthermore the timer circuit 31, 32, 33 is provided with a phase shift circuit (not illustrated), e.g. incorporated in the counter 31 which makes the first sub period 0 start with a predetermined phase shift $\alpha$ (fig 4) after the synchronization signal $U_{P1}$sync, which is also indicated in fig 4. Tests have made it apparent that in practice a phase shift $\alpha$ with a value of $\pi/5$ rad is quite satisfactory. Also it would be possible to choose other values than $\pi/3$ rad for the sub periods and the sub periods might overlap each other. The phase shift $\alpha$ is optimally chosen on the basis of the kind of pulse time modulation.

The reversible ring counter 32 has six positions in the above case and receives the polarity signal s of the operational amplifier 25 on lead 16 for reversing the counting direction if required, so that e.g. on switching from clockwise rotation to anti-clockwise rotation the sub period sequence of fig 4 is changed into that of fig 5. In the above case the decoder has 6 outputs 0–5 as well, whereby the output 0 has a pulse starting $\pi/5$ rad after $U_{P1}$sync. and lasting $\pi/3$ rad, whilst the pulse on output 5 occurs $\pi/5$ rad after the pulse on output 0 and also lasts $\pi/3$ rad.

The multiplexer furthermore comprises a selective adding circuit or switch circuit 34–43', which causes, in each respective sub period the switch on/off signals $G_{1+}$–$G_{3-}$ of the control unit 2 for a respective semiconductor switch $T_{1+}$–$T_{3-}$ in one of the series circuits of two semiconductor switches and an associated semiconductor switch in another series circuit, e.g. $T_{1+}$ and $T_{3-}$ during the respective ($T_{1+}$) and associated ($T_{3-}$) semiconductor switch being on, to pass the sensed signal i to the output of the multiplexer.

The above switch circuit may comprise, as shown in fig 1, an AND-gate and an analogue switch for each output of the decoder, i.e. six AND-gates 34–39 and six analogue switches 41–43, 41'–43'. Each AND-gate has an input connected to a respective output of the decoder 33 and receives on two remaining inputs associated switch on/off signals from the control unit 2. Thus AND-gate 34 receives the switch on/off signals $G_{1+}$ and $G_{3-}$, AND-gate 35 $G_{3-}$ and $G_{2+}$, AND-gate 35 $G_{3-}$ and $G_{2+}$, AND-gate 36 $G_{2+}$ and $G_{1-}$, AND-gate 37 $G_{1-}$ and $G_{3+}$, AND-gate 38 $G_{3+}$ and $G_{2-}$ and AND-gate 39 $G_{2-}$ and $G_{1+}$. The outputs of the AND-gates 34–39 are connected to the control inputs of the analogue switches 40–43', respectively, whilst the inputs of the analogue switches 40–43' each receive the sensed signal i from the current sensing circuit 4, whilst the outputs of the analogue switches 40–43' are jointly connected for forming the output of the multiplexer 3.

Now the operation of multiplexer 3 will be explained with reference to figs 3 and 4 and later fig 6.

For an example the sub period 0 is taken in fig 4. In this sub period the influence of $T_{1+}$ and $T_{3-}$ being on the quasy direct current flowing in the positive input lead of the invertor 1 is considered, where for simplification the sinusoidal current IL ($T_{1+}$, $T_{3-}$) indicated by a dash-dotted line, is taken in fig 3. In this sub period 0 the current illustrated in fig 3 has a zero crossing and therefore a negative area between the abscissa and the curve of said current, which is hatched and is indicated by $O_1$ and a positive area which is hatched and is indicated by $O_2$. By feeding signal i to an operational amplifier 44 and integrator comprising capacitor 45 a signal can be obtained which is representative for the difference in area for $O_2$–$O_1$, i.e. for the product between current and work factor, i.e. Im $\cdot \cos\varphi$ which signal can be fed direct to the motor voltage control means 22 as voltage correction. Then, in sub period 1, the current $I_L$ ($T_{3-}$, $T_{2+}$) is "considered", etc.

In fig 6 all this is illustrated in more detail for the sub period 0. On the top line the output signal i of the current sensing circuit is illustrated, on the second line the pulse time modulated trigger signal for the GTOs $T_{1+}$ and $T_{3-}$ and on the bottom line the signal of the sub period 0.

In this connection it is remarked that the importance of a good choice of the phase angle $\alpha$ is that e.g. in this case with the first pulse of the pulse time modulated signal the hatched negative value associated therewith is already taken into account. With the further pulses of the pulse time modulated signal it appears that the net value of i will become increasingly higher. The non-hatched parts of the signal i relate to currents belonging to other branches, which are active further on in the sinus.

According to the present invention measurement values of current and product of current and $\cos\varphi$, which occur in a frequency control-three-phase motor combination can be obtained well and relatively cheap. In fact the collected current in the direct current lead of electrolytic buffer capacitor to the invertor is measured. Said current is normally not usable, but by multiplexing that signal with signals from the control unit which control the invertor and are, therefore, in their turn the cause of said current in the direct current circuit, said current becomes recognizable and most usable for generation of signals and quantities which are required in the control device. Instead of three current measurements now only one is required, whilst a better uniformity of the three motor currents is obtained.

The signal $l_m \cdot \cos\varphi$ is used to control the motor voltage and to achieve, as a result of that, an optimum adjustment of the motor as regards efficiency and noise and for the control of the motor frequency so that with it torque adjustments can be realized. As the $l_m \cdot \cos\varphi$ signal is built up from signals which occur six times per sinus or cycle the integration time of the integrator 44, 45 can remain short, which implies that the measurement of $l_m \cdot \cos\varphi$ is faster and the control loops can function faster and better as a result of that. The $l_m \cdot \cos\varphi$ signal may vary from positive to negative, e.g. from twice the nominal motor current to the motor current which comes about when the motor is driven by its load or when the rotary field frequency decreases faster than the motor with its load can follow.

Connected to the output of the integrator 44, 45 is a differential amplifier, comprising operational amplifier 46 and adjusting means 47. Operational amplifier 46 compares the output signal a of the integrator 44, 45 with a pre-adjustment and makes the adjustment of a constant torque possible by feedbacking the signal b as a frequency correction signal to operational amplifier 23, whilst feeding signal a directly to the motor voltage control 22 produces an adjustment for the minimal motor current for the relevant load. Due to a voltage control thanks to control signal a less noise and less wattless current, and therefore a higher efficiency, is caused or realized respectively. By giving a voltage increase on starting (or with blocked motor) which is allowed by the $l_m \cdot \cos\varphi$ signal and is discharged again when the motor is rotating unprecedently high starting torques are possible with the frequency control.

Referring back to the sensed signal i of fig 6 it is remarked that the form of the quasi direct current depends on the frequency, voltage and load of the motor. With a smaller motor load the negative current parts become larger.

By comparing the signal a in comparator 48 with a pre-adjustment adjusted by adjusting means 49 the output signal c of the comparator 48 indicates whether the controlled motor is motor or generator driven. Said signal c is necessary for correcting, witch excess current, the frequency in case of generator or motor operation upwards or downwards respectively. This is done by means of operational amplifier 61 with adjusting means 59 and operational amplifier 60 with adjusting means 58, which feed a corresponding frequency correcting signal d, e respectively to operational amplifier 23. The output signal d of operational amplifier 60 corrects the frequency downwards, therefore, whereas the output signal e of the operational amplifier 61 corrects the frequency upwards. One input of operational amplifier 60 is connected to an analogue switch 56 and one input of operational amplifier 61 is connected to analogue switch 57, whilst both analogue switches 56 and 57 are connected to the output of one operational amplifier 54. The control inputs of the analogue switches 56 and 57 are driven by the output signal c, inverted by the invertor 55, of the comparator 48 and the non-inverted output signal c of comparator 48 respectively. The non-inverting and inverting inputs of the operational amplifier 54 are connected to analogue switches 52 and 53, respectively which both receive the signal i from the current sensing circuit 4. Said circuit is somewhat different in practice viz. by digital signals the control means are suppressed and with a feedback diode such an output becomes 0 then. In this connection a comparator 50 is furthermore provided, one input of which is fed 0 and the other also receives the signal i from the current measuring circuit 4. The output of the comparator is connected to the control input of the analogue switch 52 whilst the output of the comparator 50 is connected to the control input of the analogue switch 53 via an invertor 51. The comparator 50 can be seen as a detector for detecting whether the signal i is positive or negative. The operational amplifier 54 finally provides, thanks to comparator 50, rectification of the signal i. The output signal of the operational amplifier 54 is used for limiting and or controlling maximum effective current in the invertor and/or motor.

The importance of motor-generator operation detection is as follows. The fed motor may sometimes also be driven by the load. Also in the situation that the motor frequency offered decreases faster than the motor can keep up with such a situation is effected. The rotary field is lower then than the associated number of revolutions of the motor, causing the motor to run oversynchronously. This generator operation needs to be detected precisely and is used for controlling the motor frequency downwards with i.a. too large effective current with motor operation and upwards in case of generator operation.

Analogue switch 52 is connected to the non-inverting input of operational amplifier 54, whilst analogue switch 53 is connected to the inverting input thereof, whereby operational amplifier 54 finally provides, thanks to comparator 50, rectification of the sense signal i which is indicated by $I_m$. Said signal $I_m$ is fed to the motor voltage control means 22, which is provided with means for increasing $\cos\varphi$ by deduction of $I_m$ from $a(I_m \cdot \cos\varphi)$ and also on that basis making the control unit selectively control the motor voltage.

To the output of the current sensing circuit 4 there is furthermore connected a comparator 65, whereby the other input of the comparator 65 is connected to an adjusting means 70, with which a reference voltage has been adjusted, which is representative for an admissible peak current, whilst the output signal j of the comparator 65 is fed to the control unit 2 for blocking the passage of switch on/off signals $G_{1+}$–$G_{3}$– to the semiconductor switches $T_{1+}$–$T_{3}$–, when the signal i exceeds the admissible maximum current. The comparator 65 is used, therefore, for quickly switching off the invertor with excess current (short circuit).

Preferably the current sensing circuit is provided with an input for adjusting the signal i at its output to 0, when no direct current flows in the input lead of the invertor 1. By feeding a correcting signal h to said input the signal i can be controlled to zero at moments that there is no current and the signal i should be zero. The current measurement viz. ranges from direct current to a few megaherz. The direct voltage curve or any residual magnetism in the current measuring coil, when a more expensive Hall-element is applied, is corrected by means of said signal h.

For this purpose the output of the current sensing circuit 4 is connected, via an analogue switch 69 and an integrator, comprising adjusting means 67, operational amplifier 66 and condensor 68, to said input of the current sensing circuit 4, whereby the control input of the analogue switch 65 is connected to a detecting circuit, which detects whether none of the semiconductor switches $T_{1+}$–$T_{3}$– is switched on and therefore no current can flow, in sum referred to as non-current circuit 62, 63, 64, which in particular comprises two OR-gates 62, 63, whereby to the one OR-gate 62 the switch on/off signals $G_{1+}$, $G_{2+}$, $G_{3+}$ for the semiconductor switches $T_{1+}$, $T_{2+}$, $T_{3+}$ connected to one of the input leads, i.e. the positive input lead of the invertor, are applied, as well as a NAND-gate 64 connected between the outputs of the OR-gates and the control input of the analogue switch.

As said before measuring errors in the current sensing circuit quickly occur with a current measurement with its total processing due to interference influences, temperature and residual magnetism. By coupling, by means of analogue switch 69, the signal i to operational amplifier 66, which is connected as an integrator, at certain moments when no current flows or can flow in the direct current circuit because no control is present, a correct zero adjustment of the current measuring circuit can be detected as the integrator will not generate an output voltage. If, however, a certain value for the signal i is measured at these moments, then this will be corrected by means of the abovementioned integrator .66, 68 by feedback to the current sensing circuit.

## Claims

1. Frequency and/or voltage control device for at least partially inductive loads, comprising an invertor (1) with two input leads for connection to a positive and negative DC voltage ($+U_{dc}$, $-U_{dc}$), respectively, three pairs of semiconductor switches ($T_{1+}$, $T_{1}$–; $T_{2+}$, $T_{2}$–; $T_{3+}$, $T_{3}$–) having a control electrode each pair being connected in series between the input leads, and three output leads, each being connected to a junction of a respective series circuit of two semiconductor switches, a control unit (2) for selectively feeding switch on/off signals ($G_{1+}$ $G_{2+}$ $G_{3+}$, $G_{1}$– $G_{2}$– $G_{3}$–) to the control electrodes of the semiconductor switches, a current sensing circuit (4) for sensing at least one current related to the operation of the invertor and for providing a sensed signal (i) corresponding therewith, and a processing unit for converting the sensed signal of the current sensing circuit into at least one feedback signal (a) for the control unit, wherein the current sensing circuit is provided at the input side of the invertor for sensing, during operation of the control device, a quasi direct current ($I_{dc}$), generated by switching of the semiconductor switches of the invertor in at least one of the input leads of the invertor, characterized in that the processing unit comprises a multiplexer (3) which, by multiplexing the sensed signal of the current sensing circuit with a timing in accordance to the switch on/off signals of the control unit, generates said at least one feedback signal.

2. Control device as claimed in claim 1, characterised in that the multiplexer (3) of the processing unit receives a signal ($f_s$) which is representative for the cycle of the sinusoidal, on the average, phase voltages ($U_{Pi}$) on the output leads of the invertor (1) and comprises a timer circuit (31–33), which determines a number of sub periods (0–5) within the cycle period, as well as a switch circuit (34–39, 41–43, 41'–43'), which causes, in each respective sub period the switch on/off signals ($G_{1+}$ $G_{2+}$ $G_{3+}$, $G_{1}$– $G_{2}$– $G_{3}$–) of the control unit (2) for a respective semiconductor switch ($T_{1+}$ $T_{2+}$ $T_{3+}$, $T_{1}$– $T_{2}$– $T_{3}$–) in one of the series circuits of two semiconductor switches and an associated semiconductor switch in another series circuit of two semiconductor switches during the respective and associated semiconductor switch being on, to pass the sensed signal (i) to the output of the multiplexer.

3. Control device as claimed in claim 1 or 2, characterised in that it comprises a synchronisation circuit (in 2), which generates a synchronisation signal (on 18) related to the zero crossing in one direction of one of the phase voltages ($U_{Pi}$), and that the multiplexer (3) comprises a phase shift circuit (in 31) which starts the first sub period (O) with a certain phase shift after the start of said phase voltage determined by the synchronisation signal.

4. Control device as claimed in claim 3, characterised in that the number of sub periods (0–5) is 6 and that the sub periods are substantially contiguous.

5. Control device as claimed in claim 3 or 4, characterised in that the phase shift is $\pi/5$rad.

6. Control device as claimed in any of the claims 2–5, characterised in that the timer circuit (31–33) comprises a counter (31), which determines the sub periods (0–5), a reversible ring counter (32) connected in series thereto with a number of positions equal to the number of sub periods, to the up/down input terminal of which a signal (s) is fed which is representative for the direction of rotation of the rotary field generated by the invertor (1) and a 1 from n decoder (33) connected in series to the ring counter, whereby n is equal to the number of sub periods.

7. Control device as claimed in claim 6, characterised in that the switch circuit comprises a number of AND-gates (34–39) being equal to the number of sub periods (0–5), which are each connected to a respective output of the decoder (33) and furthermore receive two respective switch on/off signals (G–, G+) from the control unit (2), and a number of analogue switches (41–43, 41'–43') connected in parallel between the output of the multiplexer (3) and the output of the current sensing circuit (4), wherein the control output of each analogue switch is connected to the output of the respective AND-gate.

8. Control device as claimed in any of the preceding claims, characterised in that to the output of the multiplexer (3) there is connected an integrator (44, 45), which provides a signal (a) which is representative for the product between the load current ($I_m$) and the work factor ($\cos\varphi$), which signal is fed, possibly after processing, as a feedback signal to the control unit (2) for keeping the load voltage on its set value.

9. Control device as claimed in claim 8, characterised in that to the output integrator (44, 45) there is connected an amplifier (46), the output signal (b) of which is representative for the torque of a motor as a load, which signal is fed to the control unit (2) as a frequency correcting signal ($f_c$) for keeping the number of revolutions of the motor on the set value.

10. Control device as claimed in claim 8 or 9, characterised in that to the output of the integrator (44, 45) there is connected an input of a comparator (48), another input of which receives a reference signal (from 49) and the output (c) of which indicates whether the load takes up or delivers power, or operates as a motor or as a generator.

11. Control device as claimed in claim 10, characterised in that to the output of the current sensing circuit (4) there is connected a current polarity detection circuit (50–53), which on the basis of the detection result passes the sensed signal (i) of the current sensing circuit to the one or other terminal of an amplifier (54) the output signal of which the effective motor current $I_m$ is passed in accordance with the generator/motor signal (c) of the comparator (48) to a second (60) or third amplifier (61), which deliver an output signal (d; e) which is representative for accelerating of braking respectively, wherein said output signal is fed to the control unit (2) as a frequency correcting ($f_c$) signal.

12. Control device as claimed in claim 11, characterised in that $\cos\varphi$ is obtained by extracting $I_m$ from the obtained $I_m \cdot \cos\varphi$ signal.

13. Control device as claimed in any of the preceding claims, characterised in that a comparator (65) is coupled to the output of the current sensing circuit (4), the other input of the comparator receiving a reference voltage (from 70) being representative for an allowable maximum current, and of which the output signal (j) blocks the passage of the on/off switch signals (G) to the semiconductor switches (T) when the sensed signal (i) exceeds the allowable maximum current.

14. Control device as claimed in any of the preceding claims, characterised in that the current sensing circuit (4) is provided with an input (h) for adjusting the sensed signal (i) at its output to zero and that the output of the current sensing circuit is connected to the zero-adjusting input of the current sensing circuit via an analogue switch (69) and an integrator (66–68), wherein the control input of the analogue switch is connected to a non-current circuit (62–64) comprising two OR-gates (62, 63), wherein to the one OR-gate (62) the switch on/off signals (G+) for the semiconductor switches (T+) connected to one of the input leads of the invertor (1) are applied, and wherein to the other OR-gate (63) the switch on/off signals (G–) for the semiconductor switches (T–) connected to the other of the input leads are applied, as well as a NAND-gate (64) connected between the outputs of the OR-gates and the control input of the analogue switch.

**Patentansprüche**

1. Frequenz- und/oder Spannungsregelvorrichtung für zumindest teilinduktive Lasten, bestehend aus einem Umformer (1) mit zwei Eingangsleitungen zum Verbinden mit einer positiven bzw. negativen Gleichspannung ($+U_{dc}$, $-U_{dc}$), drei Paaren von eine Steuerelektrode aufweisenden Halbleiterschaltern ($T_{1}+$, $T_{1}-$; $T_{2}+$, $T_{2}-$; $T_{3}+$, $T_{3}-$), wobei jedes Paar in Reihe zwischen die Eingangsleitungen geschaltet ist, sowie drei Ausgangsleitungen, die jeweils mit einem Verbindungspunkt einer entsprechenden Reihenschaltung von zwei Halbleiterschaltern verbunden sind, einer Steuereinheit (2) zum selektiven Zuführen von Ein/Ausschaltsignalen ($G_{1}+$ $G_{2}+$ $G_{3}+$, $G_{1}-$ $G_{2}-$ $G_{3}-$) zu den Steuerelektroden der Halbleiterschalter, einer Stromerfassungsschaltung (4) zum Erfassen mindestens eines Stromes bezogen auf den Betrieb des Umformers und zum Erzeugen eines entsprechenden erfaßten Signals (i), und einer Prozessoreinheit zum Umformen des erfaßten Signals der Stromerfassungsschaltung in mindestens ein Rückführungssignal (a) für die Steuereinheit, wobei die Stromerfassungsschaltung auf der Eingangsseite des Umformers angeordnet ist, um während des Betriebs der Regelvorrichtung einen Quasi-Gleichstrom ($I_{dc}$) zu erfassen, der durch Schalten der Halbleiterschalter des Umformers in mindestens einer der Eingangsleitungen des Umformers erzeugt wird, dadurch gekennzeichnet, daß die Prozessoreinheit einen Multiplexer (3) aufweist, der das mindestens eine Rückführungssignal durch Multiplexen des erfaßten Signals der Stromerfassungsschaltung mit einer zeitlichen Steuerung gemäß den Ein/Ausschaltsignalen der Steuereinheit erzeugt.

2. Regelvorrichtung nach Anspruch 1, dadurch gekennzeichnet, daß der Multiplexer (3) der Prozessoreinheit ein Signal ($f_s$) empfängt, welches den Zyklus der im Durchschnitt sinusförmigen Phasenspannungen ($U_{Pi}$) an den Ausgangsleitungen des Umformers (1) darstellt, und eine Timer-Schaltung (31–33) aufweist, die innerhalb der Zyklusperiode eine Anzahl von Unterperioden (0–5) bestimmt, sowie weiterhin einen Schaltkreis (34–39, 41–43, 41'–43') aufweist, der in jeder entsprechenden Unterperiode die für einen entsprechenden Halbleiterschalter ($T_{1+}$ $T_{2+}$ $T_{3+}$, $T_{1+}$ $T_{2-}$ $T_{3-}$) in einer der Reihenschaltungen von zwei Halbleiterschaltern sowie für einen zugeordneten Halbleiterschalter in einer anderen Reihenschaltung von zwei Halbleiterschaltern vorgesehenen Ein/Ausschaltsignale ($G_{1+}$ $G_{2+}$ $G_{3+}$, $G_{1-}$ $G_{2-}$ $G_{3-}$) der Steuereinheit (2) veranlaßt, während der entsprechende und der zugeordnete Halbleiterschalter eingeschaltet sind, das erfaßte Signal (i) zu dem Ausgang des Multiplexers durchzulassen.

3. Regelvorrichtung nach Anspruch 1 oder 2, gekennzeichnet durch eine Synchronisationsschaltung (in 2), die ein auf den Nulldurchgang in einer Richtung einer der Phasenspannungen ($U_{Pi}$) bezogenes Synchronisationssignal (auf 18) erzeugt, wobei der Multiplexer (3) eine Phasenschieberschaltung (in 31) aufweist, die anhand des Synchronisationssignals die erste Unterperiode (0) mit einer bestimmten Phasenverschiebung nach dem Beginn der Phasenspannung startet.

4. Regelvorrichtung nach Anspruch 3, dadurch gekennzeichnet, daß die Anzahl der Unterperioden (0–5) sechs beträgt, und daß die Unterperioden im wesentlichen aneinander angrenzen.

5. Regelvorrichtung nach Anspruch 3 oder 4, dadurch gekennzeichnet, daß die Phasenverschiebung $\pi/5$rad beträgt.

6. Regelvorrichtung nach einem der Ansprüche 2 bis 5, dadurch gekennzeichnet, daß die Timer-Schaltung (31–33) einen die Unterperioden (0–5) festlegenden Zähler (31) und einen mit diesem in Reihe geschalteten, reversiblen Ringzähler (32) mit einer Anzahl von Stellen aufweist, die gleich der Anzahl der Unterperioden ist, wobei dem Up/Down-Eingangsanschluß des Ringzählers ein Signal (s) zugeführt wird, welches die Drehrichtung des durch den Umformer (1) erzeugten Drehfeldes darstellt, sowie einen mit dem Ringzähler in Reihe geschalteten, 1-von-n-Dekoder (33), wobei n gleich der Anzahl der Unterperioden ist.

7. Regelvorrichtung nach Anspruch 6, dadurch gekennzeichnet, daß der Schaltkreis eine der Anzahl der Unterperioden (0–5) entsprechende Anzahl von UND-Gattern (34–39) aufweist, die jeweils mit einem entsprechenden Ausgang des Dekoders (33) verbunden sind und weiterhin zwei entsprechende Ein/Ausschaltsignale (G–, G+) von der Steuereinheit (2) empfangen, sowie eine Anzahl von Analog-Schaltern (41–43, 41'–43'), die parallel zwischen den Ausgang des Multiplexers (3) und den Ausgang der Stromerfassungsschaltung (4) geschaltet sind, wobei der Steuerausgang jedes Analog-Schalters mit dem Ausgang des entsprechenden UND-Gatters verbunden ist.

8. Regelvorrichtung nach einem der vorhergehenden Ansprüche, dadurch gekennzeichnet, daß mit dem Ausgang des Multiplexers (3) ein Integrator (44, 45) verbunden ist, der ein Signal (a) erzeugt, welches das Produkt aus dem Laststrom ($I_m$) und dem Leistungsfaktor ($\cos\varphi$) darstellt, wobei dieses Signal, gegebenenfalls nach einer Verarbeitung, als ein Rückführungssignal der Steuereinheit (2) zugeführt wird, um die Lastspannung auf ihrem eingestellten Wert zu halten.

9. Regelvorrichtung nach Anspruch 8, dadurch gekennzeichnet, daß mit dem Ausgang des Integrators (44, 45) ein Verstärker (46) verbunden ist, dessen Ausgangssignal (b) das Drehmoment eines Motors als eine Last darstellt, wobei dieses Signal der Steuereinheit (2) als ein Frequenz-Korrektursignal ($f_c$) zugeführt wird, um die Drehzahl des Motors auf dem eingestellten Wert zu halten.

10. Regelvorrichtung nach Anspruch 8 oder 9, dadurch gekennzeichnet, daß mit dem Ausgang des Integrators (44, 45) ein Eingang eines Komparators (48) verbunden ist, dessen anderer Eingang ein Referenzsignal (von 49) erhält, und dessen Ausgang (c) anzeigt, ob die Last Leistung aufnimmt oder abgibt, oder als ein Motor oder als ein Generator arbeitet.

11. Regelvorrichtung nach Anspruch 10, dadurch gekennzeichnet, daß mit dem Ausgang der Stromerfassungsschaltung (4) eine Strompolaritäts-Erfassungsschaltung (50–53) verbunden ist, die auf der Basis des Erfassungsergebnisses das erfaßte Signal (i) der Stromerfassungsschaltung den einen oder dem anderen Anschluß eines Verstärkers (54) zuführt, dessen Ausgangssignal der effektive Motorstrom ($I_m$) ist und gemäß dem Generator/Motorsignal (c) des Komparators (48) einem zweiten (60) oder dritten Verstärker (61) zugeführt wird, der ein Ausgangssignal (d; e) abgibt, welches Beschleunigen bzw. Bremsen darstellt, wobei dieses Ausgangssignal als ein Frequenz-Korrektursignal ($f_c$) der Steuereinheit (2) zugeführt wird.

12. Regelvorrichtung nach Anspruch 11, dadurch gekennzeichnet, daß $\cos\varphi$ durch Extraktion von $I_m$ aus dem $I_m \cdot \cos\varphi$-Signal erhalten wird.

13. Regelvorrichtung nach einem der vorhergehenden Ansprüche, dadurch gekennzeichnet, daß mit dem Ausgang der Stromerfassungsschaltung (4) ein Komparator (65) verbunden ist, dessen anderer Eingang eine einen zulässigen Maximalstrom repräsentierende Referenzspannung (von 70) erhält, und dessen Ausgangssignal (j) den Durchgang der Ein/Ausschaltsignale (G) zu den Halbleiterschaltern (T) sperrt, wenn das erfaßte Signal (i) den zulässigen Maximalstrom übersteigt.

14. Regelvorrichtung nach einem der vorhergehenden Ansprüche, dadurch gekennzeichnet, daß die Stromerfassungsschaltung (4) mit einem Eingang (h) zum Einstellen des erfaßten Signals (i) an ihrem Ausgang auf Null ausgestattet ist, und daß der Ausgang der Stromerfassungsschaltung mit dem Null-Einstell-Eingang der Stromerfassungsschaltung über einen Analog-Schalter (69) und einen Integrator (66-68) verbunden ist, wobei der Steuereingang des Analog-Schalters mit einer zwei ODER-Gatter (62, 63) aufweisenden Nicht-Strom-Schaltung (62-64) verbunden ist, wobei dem einen ODER-Gatter (62) die Ein/Ausschaltsignale (G+) für die mit einer der Eingangsleitungen des Umformers (1) verbundenen Halbleiterschalter (T+) zugeführt werden, und wobei dem anderen ODER-Gatter (63) die Ein/Ausschaltsignale (G–) für die mit der anderen der Eingangsleitungen verbundenen Halbleiterschalter (T–) zugeführt werden, wobei zwischen die Ausgänge der ODER-Gatter und den Steuereingang des Analog-Schalters ein NAND-Gatter (64) geschaltet ist.

## Revendications

1. Dispositif de commande de fréquence et, ou bien, de tension pour des charges au moins partiellement inductives, comprenant un inverseur (1) doté de deux fils conducteurs d'entrée assurant respectivement la connexion à une tension continue positive et une tension continue négative (+$U_{dc}$, –$U_{dc}$), de trois paires de commutateurs à semiconducteur ($T_1$+, $T_1$–; $T_2$+, $T_2$–; $T_3$+, $T_3$–) possédant une électrode de commande, qui sont chacune connectées en série entre les fils conducteurs d'entrée, et de trois fils conducteurs de sortie qui sont chacun connectés à la jonction d'un circuit série respectif de deux commutateurs à semiconducteur, une unité de commande (2) servant à fournir sélectivement des signaux de commutation en service/hors service ($G_1$+ $G_2$+ $G_3$+, $G_1$– $G_2$– $G_3$–) aux électrodes de commande des commutateurs à semiconducteur, un circuit (4) de détection de courant servant à détecter au moins un courant associé au fonctionnement de l'inverseur et servant à produire un signal détecté (i) lui correspondant, et une untié de traitement servant à convertir le signal détecté du circuit de détection de courant en au moins un signal de réaction (a) destiné à l'unité de commande, où le circuit de détection de courant est placé du côté d'entrée de l'inverseur afin de détecter, pendant le fonctionnement du dispositif de commande, un courant quasi-continu ($I_{dc}$) produit par commutation des commutateurs à semiconducteur de l'inverseur dans au moins un des fils conducteurs d'entrée de l'inverseur, caractérisé en ce que l'unité de traitement comprend un multiplexeur (3) qui, par multiplexage du signal détecté du circuit de détection de courant avec un minutage qui est fonction des signaux de commutation en service/hors service de l'unité de commande, produit ledit ou lesdits signaux de réaction.

2. Dispositif de commande selon la revendication 1, caractérisé enc e que le multiplexeur (3) de l'unité de traitement reçoit un signal ($f_s$) qui est représentatif des tensions ($U_{Pi}$) de phase sinusoïdale en moyenne présentes sur les fils conducteurs de sortie de l'inverseur (1) et comprend un circuit de minutage (31–33) qui détermine le nombre de sous-périodes (0–5) comprises à l'intérieur de la période du cycle, ainsi qu'un circuit de commutation (34–39, 41–43, 41'–43') qui fait en sorte, dans chaque sous-période respective, que les signaux de commutation en service/hors service ($G_1$+ $G_2$+ $G_3$+, $G_1$– $G_2$– $G_3$–) de l'unité de commande (2) se rapportant à un commutateur à semiconducteur respectif ($T_1$+ $T_2$+ $T_3$+, $T_1$– $T_2$– $T_3$–) de l'un des circuits série de deux commutateurs à semiconducteur et un commutateur à semiconducteur associé d'un autre circuit série de deux commutateurs à semiconducteur pendant la mise en service des commutateurs à semiconducteur respectif et associé, transmettent le signal détecté (i) à la sortie du multiplexeur.

3. Dispositif de commande selon la revendication 1 ou 2, caractérisé en ce qu'il comprend un circuit de synchronisation (dans 2), qui produit un signal de synchronisation (sur 18) associé au passage par zéro suivant un premier sens de l'une des tensions de phase ($U_{Pi}$), et en ce que le multiplexeur (3) comprend un circuit de déphasage (dans 31) qui fait commencer la première sous-période (O) avec un certain déphasage après le début de ladite tension de phase, déterminé par le signal de synchronisation.

4. Dispositif de commande selon la revendication 3, caractérisé en ce que le nombre de sous-périodes (0–5) est 6 et en ce que les sous-périodes sont sensiblement contiguës.

5. Dispositif de commande selon la revendication 3 ou 4, caractérisé en ce que le déphasage vaut ($\pi$/5) radian.

6. Dispositif de commande selon l'une quelconque des revendications 2 à 5, caractérisé en ce que le circuit de minutage (31–33) comprend un compteur (31) qui détermine les sous-périodes (0–5), un compteur annulaire réversible (32) connecté en série avec celui-ci et comportant un nombre de positions qui est égal au nombre des sous-périodes, à la borne d'entrée de comptage/décomptage duquel un signal (s) est fourni qui est représentatif du sens de rotation du champ rotatif créé par l'inverseur (1), et un décodeur 1 sur $\underline{n}$ (33) connecté en série avec le compteur annulaire, si bien que $\underline{n}$ est égal au nombre des sous-périodes.

7. Dispositif de commande selon la revendication 6, caractérisé en ce que le circuit de commutation comprend un nombre de portes ET (34–39) égal au nombre des sous-périodes (0–5), qui sont chacune connectées à une sortie respective du décodeur (33) et reçoit de plus, de la part de l'unité de commande (2), deux signaux respectifs de commutation en service/hors service (G–, G+), et un certain nombre de commutateurs analogiques (41–43, 41'–43') connectés en parallèle entre la sortie du multiplexeur (3) et la sortie du circuit de détection de courant (4), où la sortie de commande de chaque commutateur analogique est connectée à la sortie de la porte ET respective.

8. Dispositif de commande selon l'une quelconque des revendications précédentes, caractérisé en ce que, à la sortie du multiplexeur (3), est connecté un intégrateur (44, 45) qui produit un signal (a) qui est représentatif du produit du courant de charge ($I_m$) et du facteur de charge ($\cos\varphi$), lequel signal est délivré, éventuellement après traitement, comme signal de réaction à l'unité de commande (2) de manière à maintenir la tension de charge sur sa valeur fixée.

9. Dispositif de commande selon la revendication 8, caractérisé en ce que, à la sortie de l'intégrateur (44, 45), est connecté un amplificateur (46), dont le signal de sortie (b) est représentatif de la charge correspondant au couple d'un moteur, lequel signal est envoyé à l'unité de commande (2) comme signal de correction de fréquence ($f_c$) permettant de maintenir la vitesse de révolution du moteur à la valeur fixée.

10. Dispositif de commande selon la revendication 8 ou 9, caractérisé en ce que, à la sortie de l'intégrateur (44, 45), est connectée une entrée d'un comparateur (48) dont une autre entrée reçoit un signal de référence (en provenance de 49) et dont le signal de sortie (c) indique si la charge prélève ou délivre de la puissance, ou bien fonctionne comme moteur ou comme générateur.

11. Dispositif de commande selon la revendication 10, caractérisé en ce que, à la sortie du circuit de détection de courant (4), est connecté un circuit de détection de polarité de courant (50–53) qui, sur la base du résultat de la détection, transmet le signal détecté (i) du circuit de détection de courant à l'une ou l'autre borne d'un amplificateur (54), dont le signal de sortie, le courant efficace $I_m$ du moteur, est transmis en fonction du signal générateur/moteur (c) du comparateur (48) à un deuxième amplificateur (60) ou un troisième amplificateur (61), lequel délivre un signal de sortie (d; e) qui est respectivement représentatif de l'accélération ou du freinage, où ledit signal de sortie est envoyé à l'unité de commande (2) comme signal de correction de fréquence ($f_c$).

12. Dispositif de commande selon la revendication 11, caractérisé en ce que l'on obtient $\cos\varphi$ en extrayant $I_m$ du signal $I_m \cdot \cos\varphi$ obtenu.

13. Dispositif de commande selon l'une quelconque des revendications précédentes, caractérisé en ce qu'un comparateur (65) est couplé à la sortie du circuit de détection de courant (4), l'autre entrée du comparateur recevant une tension de référence (en provenance de 70) qui est représentative du courant maximal admissible, et dont le signal de sortie (j) bloque le passage des signaux de commutation en service/hors service (G) à destination des commutateurs à semiconducteur (T) lorsque le signal détecté (i) dépasse le courant maximal admissible.

14. Dispositif de commande selon l'une quelconque des revendications précédentes, caractérisé en ce que le circuit de détection de courant (4) reçoit un signal d'entrée (h) servant à ajuster le signal détecté (i) présent sur sa sortie à zéro et en ce que la sortie du circuit de détection de courant est connectée à l'entrée d'ajustement de zéro du circuit de détection de courant via un commutateur analogique (69) et un intégrateur (66–68), où l'entrée de commande du commutateur analogique est connectée à un circuit sans courant (62–64) comprenant deux portes OU (62, 63), où, à la première porte OU (62), les signaux de commutation en service/hors service (G+) relatifs aux commutateurs à semiconducteur (T+) connectés à l'un des fils conducteurs d'entrée de l'inverseur (1) sont appliqués, et où, à l'autre porte OU (63), les signaux de commutation en service/hors service (G−) relatifs aux commutateurs à semiconducteur (T−) connectés à l'autre des fils conducteurs d'entrée sont appliqués, ainsi qu'une porte NON-ET (64) connectée entre les sorties des portes OU et l'entrée de commande du commutateur analogique.

FIG.1A.

EP 0 208 381 B1

FIG. 1B.

EP 0 208 381 B1

**FIG. 2.**

$U_{P_1}$  $U_{P_2}$  $U_{P_3}$

$U_{L_1} = U_{P_1} - U_{P_3}$    $U_{L_2} = U_{P_2} - U_{P_1}$    $U_{L_3} = U_{P_3} - U_{P_2}$

$I_L(T_1{}^+, T_3{}^-)$

**FIG. 3.**

$U_{P_1}$ sync

**FIG. 4.**

**FIG. 5.**

Fig.6.